Europäisches Patentamt

European Patent Office

Office européen des brevets

(19)

(11) Veröffentlichungsnummer: **0 093 197**

**A2**

(12) **EUROPÄISCHE PATENTANMELDUNG**

(21) Anmeldenummer: **82109526.2**

(22) Anmeldetag: **14.10.82**

(51) Int. Cl.³: **A 45 F 3/16**

(30) Priorität: **04.05.82 DE 3216640**

(43) Veröffentlichungstag der Anmeldung:
**09.11.83 Patentblatt 83/45**

(84) Benannte Vertragsstaaten:
**AT BE CH DE FR GB IT LI LU NL SE**

(71) Anmelder: **Distler, Wolfgang**
**Schulstrasse 21**
**D-8031 Eichenau(DE)**

(72) Erfinder: **Distler, Wolfgang**
**Schulstrasse 21**
**D-8031 Eichenau(DE)**

(74) Vertreter: **von Kirschbaum, Albrecht, Dipl.-Ing.**
**Hermann-Ehlers-Strasse 21a**
**D-8034 Germering(DE)**

(54) Flüssigkeitsbehälter.

(57) In einem Flüssigkeitsbehälter zur Verwendung in Wohnwagen, in Campingküchen, in und in Verbindung mit Camping- und Reisefahrzeugen, u.ä. sind zur Aufnahme von Frischwasser und/oder Abwasser zwei einander gegenüberliegende Kunststoffsäcke untergebracht, deren Fassungsvermögen jeweils etwa dem Innenvolumen des Behälters entspricht, und die über einen Frischwasseranschluß bzw. einen Abwasseranschluß mit dem Behälter verbunden sind. Der Behälter hat einen aufklappbaren und wieder zusammenlegbaren Außenbehälter vorzugsweise aus einer Kunststoff-Wellpappe.

FIG. 1

FIG. 3

EP 0 093 197 A2

Croydon Printing Company Ltd.

Anwaltsakte: D-1290 EPA

B e s c h r e i b u n g

Die Erfindung betrifft einen Flüssigkeitsbehälter zur Verwendung in Wohnwagen, in Campingküchen, in und in Verbindung mit Camping- oder Reisefahrzeugen, auf Binnenwasser- und Sportbooten u.ä..

Im Zuge des Umweltschutzes gewinnt das Auffangen und das problemlose Beseitigen von anfallendem Abwasser beim Zelten sowie bei Wohnwagen, Campingbussen, Reisemobilen u.ä. immer mehr an Bedeutung. Auch bei Sportbooten mit Pantry auf Binnenseen besteht dasselbe Problem, da beispielsweise in der Bundesrepublik bereits durch Verordnung das Überbordpumpen von Abwassern verboten ist.

Bisher wird beim Zelten bei Verwendung einer mobilen Campingküche oder bei den oben erwähnten Freizeitfahrzeugen das Abwasser aus Spül- und/oder Waschbecken über einen Schlauch direkt in den Grund geleitet oder in einen Eimer, der zur Entleerung weggetragen werden muß. Während das direkte Einleiten von Abwasser in den Boden zu einer Verschmutzung des Grundwassers führt, was beispielsweise bei einem mit 500 und mehr Einheiten belegten Campingplatz bereits sehr bedenklich und kritisch ist, ist auch bei der Lösung mit Eimern eine teilweise Verschmutzung des Grundwassers nicht verhindert, da die Eimer überlaufen oder häufig ein teilweise beabsichtigtes Loch im Boden haben, um aus Bequemlichkeitsgründen das Wegtragen des Abwassers weiter hinauszuschieben. Außerdem zieht offen dastehendes Abwasser Insekten an, was bei der heute üblichen, dichten Belegung der Campingplätze unhygienisch, ja sogar gesundheitsgefährdend sein kann. Hinzu kommt auch noch die durch die Abwasser bedingte, unvermeidliche Geruchsbelästigung.

Gemäß der Erfindung soll daher ein Flüssigkeitsbehälter zur Aufnahme von Frischwasser und/oder Abwasser geschaffen werden, der ein in sich geschlossenes, überlaufsicheres System aufweist, das insbesondere auch beim Abkuppeln von Abwasserleitungen auslaufsicher ist; gleichzeitig soll der für Frischwasser und/oder Abwasser verwendbare Flüssigkeitsbehälter einfach und problemlos zu bedienen sowie handlich und in ungefülltem Zustand besonders leicht sein. Gemäß der Erfindung ist dies bei einem Flüssigkeitsbehälter nach dem Oberbegriff des Anspruchs 1 durch die Merkmale im kennzeichnenden Teil des Anspruchs 1 erreicht. Vorteilhafte Weiterbildungen der Erfindung sind in den Unteransprüchen angegeben.

Hierbei sind in dem erfindungsgemäßen Flüssigkeitsbehälter zur Aufnahme von Frischwasser und/oder Abwasser zwei einander gegenüberliegende Kunststoffsäcke untergebracht, deren Fassungsvermögen jeweils etwa dem Innenvolumen des Behälters entspricht und die über einen Frisch- bzw. einen Abwasseranschluß mit dem Behälter verbunden sind. Gemäß einer bevorzugten Ausführungsform der Erfindung ist ein aufklappbarer und wieder zusammenlegbarer Außenbehälter aus einem formbeständigen, steifen und widerstandsfähigen Kunststoff, vorzugsweise aus einer Kunststoff-Wellpappe hergestellt.

Bei einem solchen Behälter wird im aufgefalteten Zustand über den Anschluß für Frischwasser an der nächsten Frischwasser-Zapfstelle der mit diesem Anschluß verbundene, im Inneren des Behälters untergebrachte Sack für Frischwasser gefüllt. Durch das eingefüllte Frischwasser wird der zweite, für Abwasser vorgesehene, aber noch leere Sack flach an die gegenüberliegende Wand des Außenbehälters gedrückt, so daß nun dessen gesamtes Volumen durch den mit Frischwasser gefüllten Sack ausgefüllt ist.

Nach dem Anschluß eines Entnahmeschlauches und eines Kabels für eine Tauchpumpe sowie nach dem Aufstecken eines Abwasserschlauches auf den Abwasseranschluß ist der Flüssigkeitsbehälter betriebsbereit. Über die im Sack für Frischwasser liegende Tauchpumpe, obwohl selbstverständlich auch eine selbstansaugende, außerhalb des Behälters untergebrachte Pumpe verwendet werden kann, wird Frischwasser beispielsweise in eine Spüle oder in ein Wasserbecken gepumpt. Das dann anfallende Abwasser gelangt über den Abwasseranschluß in den Sack für Abwasser. Nach dem Aufbrauchen des Frischwassers ist der Sack für Frischwasser flach gegen die Behälterwand gedrückt und der ihm gegenüberliegende Sack, der nunmehr mit Abwasser gefüllt ist, füllt dann weitgehend das gesamte Volumen des Außenbehälters aus. Damit ist ein geschlossender Kreislauf geschaffen, bei dem das Volumen und damit die Kapazität des Außenbehälters abwechselnd mit Frisch- und Abwasser gefüllt ist, so daß ein in sich geschlossenes, überlaufsicheres System geschaffen ist, bei dem irgendwelche Umweltverschmutzungen und auch Geruchsbelästigungen ausgeschlossen sind.

Gemäß einer vorteilhaften Weiterbildung der Erfindung kann das Anschließen des Flüssigkeitsbehälters über Schnellkuppler erfolgen, über die er an die Ver- und Entsorgungsschläuche beispielsweise eines Freizeitfahrzeugs angekuppelt wird; gleichzeitig wird über ein an dem Anschluß vorgesehenes Kabel, beispielsweise die Tauchpumpe angesteckt. Hierdurch wird die Handhabung des erfindungsgemäßen Flüssigkeitsbehälters so einfach, daß sie selbst von Kindern vorgenommen werden kann. Hierbei ist auch ein Verwechseln der Schnellkuppler ausgeschlossen, da die Schnellkuppler für Abwasser und Frischwasser unterschiedliche Durchmesser aufweisen. Zum Wegtragen des mit Abwasser gefüllten Behälters brauchen dann nur wieder die Kupplungen gelöst, der elektrische Anschluß für die Tauchmpumpe getrennt zu werden und der Anschluß an dem mit Abwasser gefüllten Sack mit einem Verschluß verschlossen zu werden.

Durch die Faltbarkeit des Außenbehälters mit den in seinem Inneren untergebrachten zwei Säcken für Frisch- und Abwasser kann im Leerzustand das Gerät während der Reisephasen zusammengelegt und dadurch leicht verstaut werden. Somit wird durch den zusammengelegten Behälter einerseits Stauraum gespart und gleichzeitig zusätzlicher Stauraum beispielsweise für Reisegepäck geschaffen. Außerdem entfällt die Mitnahme eines sperrigen Kanisters für Frischwasser und eines Eimers zum Auffangen des Abwassers.

Im betriebsbereiten, d.h. aufgefalteten Zustand wird immer die volle Behälterkapazität ausgenutzt. Wenn mit herkömmlichen Behältern die gleiche Ver- und Entsorgung erreicht werden soll, müßten zwei Kanister mit jeweils dem Volumen des erfindungsgemäßen Flüssigkeitsbehälters verwendet werden, wodurch ein doppelt so großer Stauraum verlorengehen würde. Aufgrund seiner geringen Abmessungen kann der erfindungsgemäße Flüssigkeitsbehälter auch in Küchenblöcken oder Waschräumen verwendet werden, was beispielsweise bei dem immer beliebter werdenden Wintercamping besonders wichtig ist, da bei Frost eine Entsorgung nach außen in Eimer nicht möglich ist.

Außerdem hat der erfindungsgemäße Flüssigkeitsbehälter ein sehr geringes Gewicht, das etwa in der Größenordnung von 750g liegt, während die bisher verwendeten Behälter für eine entsprechende Ver- und Entsorgung, nämlich im allgemeinen Kanister und Eimer, mehr als doppelt so schwer sind. Da bei einem in mehr oder weniger regelmäßigen Abständen immer wieder fälligen Gang zur Frischwasser-Zapfstelle gleichzeitig auch noch das Abwasser weggebracht und vor dem Füllen des Behälters mit Frischwasser über den Abwasseranschluß der volle Abwassersack entleert wird, ist eine große Bequemlichkeit und damit gleichzeitig auch eine beträchtliche Komfortsteigerung erreicht. Da der Abwasseranschluß verschließbar ist, kann im Unterschied zu einem Eimer beim Wegtragen von Abwasser in dem erfindungsgemäßen Flüssigkeitsbehälter kein Abwasser überschwappen.

Da während der Benutzung des erfindungsgemäßen Flüssigkeitsbehälters dieser immer mit einer etwa gleich großen Wassermenge gefüllt ist, kann anhand seines Gewichts nicht festgestellt werden, ob er noch mit einer ausreichenden Menge Frischwasser gefüllt ist. Um dies leicht und bequem optisch feststellen zu können, sind die beiden im Behälter untergebrachten Säcke unterschiedlich gefärbt, beispielsweise ist der Sack für Frischwasser blau und der Sack für Abwasser rot oder orange. Gleichzeitig ist dann noch an einer der Schmalseiten des Behälters unten auf der Seite, auf welcher der Sack für Frischwasser in dem Behälter untergebracht ist, als optische Anzeige ein Schauloch ausgebildet. Wenn dann der Sack für das Frischwasser weitgehend entleert ist, hat sich gleichzeitig der diesem Sack gegenüberliegende Abwassersack mit einer etwa der entnomenen Frischwassermenge entsprechenden Abwassermenge gefüllt, so daß der Frischwassersack gegen die Außenwand gedrückt wird und der beispielsweise rot oder orange eingefärbte Abwassersack in dem Schauloch erscheint bzw. zu erkennen ist. Dies ist dann für den Benutzer des erfindungsgemäßen Flüssigkeitsbehälters ein eindeutiger Hinweis, daß das Frischwasser weitgehend verbraucht ist.

Auch kann der erfindungsgemäße Flüssigkeitsbehälter in praktisch jeder beliebigen Größe gefertigt werden und kann sogar in Form eines Tanks ausgebildet werden, so daß er beispielsweise in mobilen Campingküchen, bei Zelten oder in mit Campingfahrzeugen verbundenen Vorzelten, bei Campingfahrzeugen im Küchenblock oder Waschraum außerhalb von Campingfahrzeugen, als Einbau in eine Außenwandkammer mit abschließbarer Tür, als Einbau in Deichselkasten eines Wohnwagens oder beispielsweise auch bei Booten im Küchenblock verwendet werden kann.

Nachfolgend wird die Erfindung anhand von bevorzugten Aus-

0093197

führungsformen unter Bezugnahme auf die anliegende Zeichnung im einzelnen erläutert. Es zeigen:

Fig.1            eine teilweise aufgeschnittene Seitenansicht
                 eines Flüssigkeitsbehälters gemäß der Erfindung;

Fig.2            eine Draufsicht auf den Flüssigkeitsbehälter
                 der Fig.1;

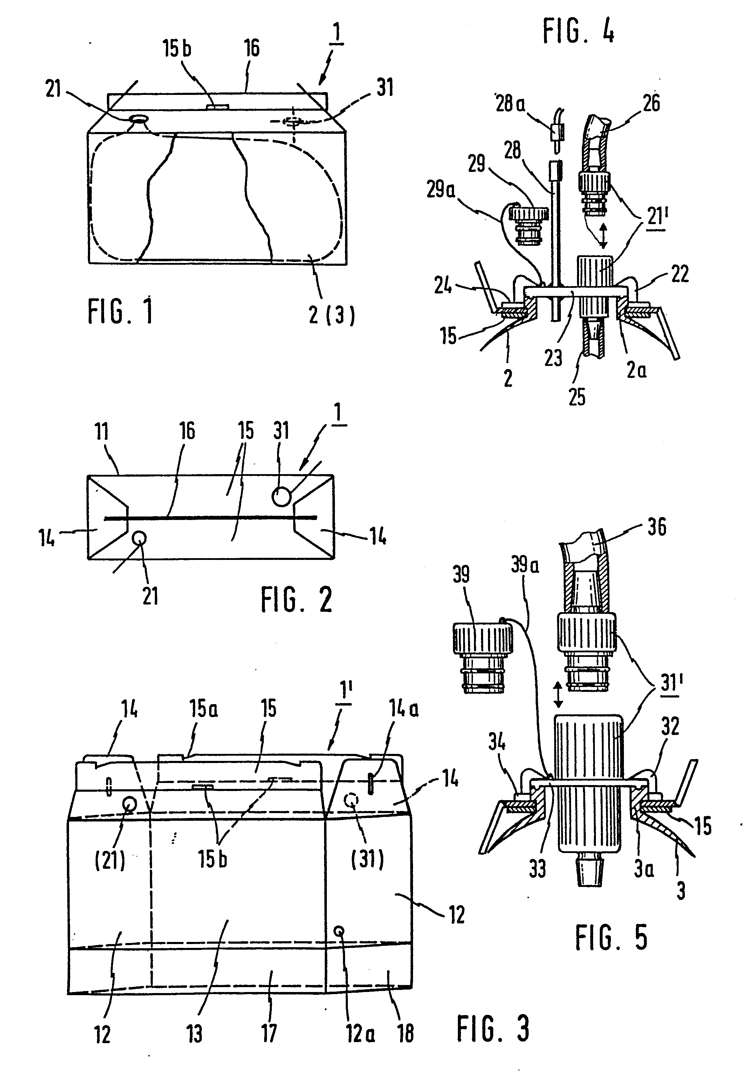

Fig.3            eine Ansicht eines Flüssigkeitsbehälters in
                 zusammengelegtem Zustand;

Fig.4            eine Schnittansicht eines mit einem Sack für
                 Frischwasser verbundenen Schnellkupplers,
                 und

Fig.5            eine Schnittansicht eines mit einem Sack für
                 Abwasser verbundenen Schnellkupplers.

In der Seitenansicht der Fig.1 ist ein in seiner Gesamtheit
mit 1 bezeichneter Flüssigkeitsbehälter dargestellt, dessen
vordere Seitenwand zum Teil aufgeschnitten ist. In einer
schräg verlaufenden Oberseite 11 des Behälters 1 sind zwei
einander gegenüberliegende Kunststoffsäcke untergebracht,
und zwar ein in Fig.1 zum Teil strichpunktiert dargestellter
Sack 2 für Frischwasser, der mit einem schematisch dargestellten, in der Oberseite 11 des Behälters gehalterten Anschluß 21 zum Einfüllen von Frischwasser verbunden ist, und
ein zweiter Sack 3 für Abwasser, der mit einem durch ein
strichpunktiertes Kreuz angedeuteten Anschluß zum Entleeren
des Abwassers verbunden ist.

In Fig.2 ist eine Draufsicht auf den Flüssigkeitsbehälter 1
wiedergegeben, in welcher die auf die Behältermitte bezogene, versetzte Anordnung der Anschlüsse 21 und 31 für Frisch-

0093197

wasser bzw. Abwasser deutlich zu erkennen ist. Während in Fig.1 und 2 ein Außenbehälter 1' des Flüssigkeitsbehälters 1 in aufgeklapptem Zustand dargestellt ist, ist der Außenbehälter 1' in Fig.3 zusammengelegtem Zustand wiedergegeben. Der Außenbehälter 1' weist Flächen 12 an seinen beiden Schmalseiten und Flächen 13 an seinen beiden Längsseiten auf, die in Fig.3 oben in etwa trapezförmigen Laschen 14 bzw. 15 enden. In den beiden Laschen 14, die den Flächen 12 an den beiden Schmalseiten des Behälters zugeordnet sind, sind in der Darstellung der Fig.3 in der Mitte etwa vertikal angeordnete Schlitze 14a ausgebildet. Etwa in der Mitte der Laschen 15, in welche die Flächen 13 an den Längsseiten des Behälters 1 übergehen, sind jeweils ein Schlitz 15b und am oberen Rand jeweils hakenförmige Hinterschneidungen ausgebildet. Die Flächen 13 an den Längsseiten des Behälters sind unten um die Breite der Flächen 12 an den Schmalseiten verlängert, wodurch jeweils ein Behälterboden 17 gebildet ist; einer der beiden Böden 17 weist an seinen beiden seitlichen Enden je einen der Breite der Flächen 12 an den Schmalseiten entsprechenden, quadratischen Ansatz 18 auf, der entlang der verstärkt wiedergegebenen Linien von dem übrigen Außenbehälter 1' abgetrennt ist.

Ferner ist in einer der Flächen 12 an den Schmalseiten des Behälters ein Schauloch 12a vorgesehen, das in der Fläche 12 am Rand auf der Seite angeordnet ist, auf welcher im aufgeklappten Zustand des Behälters 1 der Sack 2 für das Frischwasser untergebracht ist. Ferner sind in den Laschen 15 jeweils eine Öffnung zum Einsetzen eines Anschlusses 21 bzw. eines Anschlusses 31 ausgebildet. Im aufgeklappten Zustand des Außenbehälters 1 liegen die beiden Böden 17 aufeinander und die quadratischen Ansätze 18 des einen Bodens 17 liegen innen an den Flächen 12 an den Schmalseiten des Behälters an.

Als Anschlüsse 21 und 31 können beispielsweise in Fig.4 bzw. 5 dargestellte Schnellkuppler 21' bzw. 31' verwendet werden.

Wenn diese Schnellkuppler 21' und 31' wie in Fig.4 bzw. 5 in den Laschen 15 des Behälters sicher gehaltert sind, werden diese beiden Laschen gegeneinandergeklappt, so daß ihre beiden oberen Hälften aufeinanderliegen. Anschließend werden dann die Laschen 14 so nach innen geklappt, daß die beiden aneinanderliegenden, oberen Hälften der Laschen 15 durch die Schlitze 14a in den Laschen 14 vorstehend und die oberen Enden der Schlitze 14a hinter den hakenförmigen Hinterschneidungen 15a einrasten. Durch die beiden einander gegenüberliegenden Ausschnitte 16b in den beiden Laschen 15 ist dann ein Tragegriff 16 für den Flüssigkeitsbehälter 1 ausgebildet.

Anhand von Fig.4 und 5 wird nunmehr die Halterung der Schnellkuppler 21' und 31' an einem Sack 2 für Frischwasser bzw. an einem Sack 3 für Abwasser sowie in den Laschen 15 des Behälters 1 beschrieben. In die Säcke 2 und 3 ist jeweils ein Anschluß 2a bzw. 3a eingeschweißt, der ein Außengewinde aufweist und in dessen oberen freien Rand ein zur Drehsicherung verwendbarer Einschnitt ausgebildet ist. Die in die Säcke 2 und 3 eingeschweißten Anschlüsse 2a bzw. 3a werden so in die Öffnungen (21 bzw. 31) in den Laschen 15 eingesetzt, daß der mit Außengewinde versehene Teil der Anschlüsse 2a bzw. 3a über die Oberseite der Laschen 15 vorsteht. Auf das Außengewinde der Anschlüsse 2a bzw. 3a wird dann jeweils ein Feststellring 24 bzw. 34 geschraubt. Dann wird auf den Anschlüssen 2a bzw. 3a jeweils eine Verschlußplatte 23 bzw. 33 so angeordnet, daß an der Unterseite der jeweiligen Verschlußplatte 23 bzw. 33 ausgebildete Ansätze in die in dem jeweiligen Anschluß 2a bzw. 3a ausgebildeten Einschnitte einrasten. Die dadurch verdrehhungssicher eingesetzte Verschlußplatte 23 bzw. 33 wird an dem jeweiligen Anschluß 2a bzw. 3a durch einen Verschlußring 22 bzw. 32 gesichert.

Von den Verschlußplatten 23 bzw. 33 steht nach außen ein verdrehbarer Kuppelteil des jeweiligen Schnellkupplers 21' bzw. 31' vor. Ferner ist mit der jeweiligen Verschlußplatte 23 bzw. 33 über einen Kunststoffaden 29a bzw. 39a ein Verschluß 29 bzw. 39 verbunden. Durch die Verschlußplatte 23 des mit dem Sack 2 für Frischwasser verbundenen Schnellkupplers 21' ist noch ein Kabel 28 hindurchgeführt und damit verbunden, das zu einer vorher in den Behälter 2 für Frischwasser eingesetzten (nicht näher dargestellten) Tauchpumpe führt. An dem ins Innere des Sackes 2 für Frischwasser vorstehenden Ende des Schnellkupplers 21' ist ein zur Tauchpumpe führender Schlauch 25 angebracht.

Wenn ein aufgeklappter und mit den Schnellkupplern 21' bzw. 31' verbundener Behälter 1 mit Frischwasser gefüllt werden soll, braucht nur der Verschlußring 22 gelöst zu werden und die Verschlußplatte 23 mit dem Schnellkuppler 21' und dem mit ihm verbundenen und zur Tauchpumpe führenden Kabel 28 nur so weit angehoben zu werden, daß die Öffnung des eingeschweißten Anschlusses 2a frei daliegt. Über diese Öffnung des Anschlusses 2a kann dann das Frischwasser eingefüllt werden. Nach dem Füllen des Sackes 2 wird die Verschlußplatte 23 wieder verdrehungssicher aufgesetzt und mittels des Verschlußringes 22 an dem eingeschweißten Anschluß 2a gesichert. Damit kein Frischwasser verschüttet wird bzw. das Frischwasser nicht verschmutzt wird, wird der Verschluß 29 in den mit der Verschlußplatte 23 verbundenen Teil des Schnellkupplers 21' geschraubt.

Nachdem dann der Flüssigkeitsbehälter an der vorgesehenen Stelle untergebracht ist, wird der mit einem zum Auslaufhahn führenden Schlauch 26 verbundene Teil des Schnellkupplers 21' in den mit der Verschlußplatte 23 verbundenen Teil des Schnellkupplers 21' eingeführt. Der mit der Verschlußplatte 23 verbundene Teil des Schnellkupplers 21' wird dann um etwa 90° verdreht, wodurch dann eine sichere Verbindung zwischen dem zur Tauchpumpe führenden Schlauch 25 und dem zu einem Auslaufhahn führenden Schlauch 26 hergestellt ist. Anschließend wird dann noch ein Stecker 28a mit dem zur Tauchpumpe führenden Kabel 28 verbunden. Ferner wird ein Kupplungsteil des Schnellkupplers 31', der mit einem zu einer Spüle oder einem Waschbecken führenden Schlauch 36 verbunden ist, in den mit der Verschlußplatte 33 verbundenen Teil des Schnellkupplers 31' eingeführt; der mit der Verschlußplatte 33 verbundene Teil des Schnellkupplers 31' wird dann um etwa 90° gedreht, wodurch eine sichere Verbindung zwischen dem zu einer Spüle oder einem Waschbecken führenden Schlauch 36 und dem Inneren des Sacks 3 für Abwasser hergestellt ist.

Wenn dann auf diese Weise die Schnellkuppler 21' und 31' mit dem zu einem Auslaufhahn führenden Schlauch 26 bzw. mit dem zu einer Spüle oder einem Waschbecken führenden Schlauch 36 verbunden sind, ist dadurch ein in sich geschlossenes, überlaufsicheres System geschaffen, durch das Umweltverschmutzungen oder auch Geruchsbelästigungen ausgeschaltet sind. Wenn dann der gesamte Frischwasservorrat aus dem Sack 2 entnommen ist und eine etwa gleich große oder geringere Menge verbrauchten Wassers, d.h. von Abwasser, in den hierfür vorgesehenen Behälter 3 abgeflossen ist, werden die Schnellkuppler 21' und 31' wieder gelöst. Ferner wird der mit der Verschlußplatte 33 verbundene Kupplungsteil des Schnellkupplers 31' durch den Verschluß 39 verschlossen, damit kein Abwasser aus dem Sack 3 über die Öffnung in dem Anschluß 3a überschwappen kann.

Bevor der Sack 2 für das Frischwasser wieder gefüllt werden kann, muß nunmehr der mit Abwasser gefüllte Sack 3 an einer hierfür vorgesehenen Stelle entleert werden. Hierzu wird dann der Verschlußring 32 abgeschraubt, und die Verschlußplatte 33 mit dem an ihr angebrachten Kupplungsteil wird abgenommen, so daß dann die Öffnung des eingeschweißten Anschlusses 3a frei wird und der mit Abwasser gefüllte Sack 3 entleert werden kann. Sobald der Sack 3 entleert ist, wird die Verschlußplatte 33 mittels des Verschlußrings 32 wieder an dem eingeschweißten Anschluß 3a gesichert. Nunmehr kann der in dem Sack 2 für Frischwasser eingeschweißte Anschluß 2a in der oben beschriebenen Weise geöffnet werden und der Sack 2 kann wieder mit Frischwasser gefüllt werden.

Da der erfindungsgemäße Flüssigkeitsbehälter immer mit einer bestimmten Menge Wasser gefüllt ist, kann anhand des Gewichts nicht festgestellt werden, ob der Behälter beispielsweise eine ausreichende Menge Frischwasser enthält. Um dies feststellen zu können, sind die beiden Säcke 2 und 3 unterschiedlich gefärbt; beispielsweise ist der Sack 2 für Frischwasser blau und der Sack 3 für Abwasser rot oder orange gefärbt. Ferner ist in einer der Flächen 12 an der Schmalseite des Behälters 1 das Schauloch 12a ausgebildet. Und zwar ist das Schauloch 12a am Rand auf der Seite des Behälters angeordnet, auf welcher der blaue Sack 2 für Frischwasser angeordnet ist. Wenn nun beispielsweise der Sack 2 ausreichend mit Frischwasser gefüllt ist, ist das Schauloch 12a durch einen Teil des blauen Sackes 2 ausgefüllt. Wenn dann weitgehend alles Frischwasser aus dem Sack 2 entnommen ist, wird der blaue Sack 2 von dem Schauloch 12a weg und an die entsprechende Seitenwand des Behälters 1 gedrückt. Gleichzeitig erscheint dann in dem Schauloch 12a ein Teil des roten oder orangen Sacks 3 für Abwasser, so daß auf diese Weise dem Benutzer optisch angezeigt ist, daß der Sack 2 für Frischwasser praktisch leer ist, da er von dem mit Abwasser gefüllten Sack 3 von dem Schauloch 12a weg und gegen die Seitenwand des Behälters 1 gedrückt worden ist.

Obwohl ein aufklappbarer und wieder zusammenlegbarer Außenbehälter 1' die verschiedenen eingangs angeführten Vorteile aufweist, können ein Sack 2 für Frischwasser und ein Sack 3 für Abwasser selbstverständlich auch in einem starren, nicht zusammenklappbaren Behälter untergebracht sein. Auch ein solcher Flüssigkeitsbehälter, in welchem zwei einander gegenüberliegende Kunststoffsäcke untergebracht sind, weist z.B. abgesehen von der Stauraum-Einsparung im wesentlichen

- 12 -

die gleichen Vorteile und Vorzüge wie ein aufklappbarer bzw. zusammenlegbarer Außenbehälter auf.

Um die im Hinblick auf den Umweltschutz geforderte Überlaufsicherheit zu erreichen, ist das Volumen des Sacks 3 für Abwasser etwa 5 bis 10% größer als das Volumen des Sacks 2 für das Frischwasser. Dadurch ist gewährleistet, daß auch bei Anreicherung des verbrauchten Frischwassers durch Essensreste oder durch Spülmittel der Sack 3 die anfallende Abwassermenge aufnehmen kann, ohne daß er beim Abkuppeln des Schlauches 36 überläuft. Einer Verwechslung der beiden Schnellkuppler 21' bzw.31' ist dadurch vorgebeugt, daß die beiden Schnellkuppler unterschiedliche Durchmesser aufweisen. Beispielsweise hat der Schnellkuppler 21' einen Durchmesser von 10 bis 12mm, während der Schnellkuppler 31' einen Durchmesser von 19 bis 20mm hat.

Ende der Beschreibung

Anwaltsakte: D-1290 EPA

Wolfgang Distler
D-8031 Eichenau

---

Flüssigkeitsbehälter

---

P a t e n t a n s p r ü c h e

1. Flüssigkeitsbehälter zur Verwendung in Wohnwagen, in Campingküchen, in und in Verbindung mit Camping- und Reisefahrzeugen, auf Binnenwasser-Sportbooten u.ä., dadurch g e k e n n z e i c h n e t, daß zur Aufnahme von Frischwasser und/oder Abwasser in dem Behälter (1) zwei einander gegenüberliegende Kunststoffsäcke (2, 3) untergebracht sind, deren Fassungsvermögen jeweils etwa dem Innenvolumen des Behälters (1) entspricht, und die über einen Frischwasseranschluß (21) bzw. einen Abwasseranschluß (31) mit dem Behälter (1) verbunden sind.

2. Behälter nach Anspruch 1, dadurch g e k e n n z e i c h n e t, daß das Fassungsvermögen des Sackes (3) für Abwasser etwa 5 bis 10% größer ist als das des Sackes (2) für Frischwasser.

- 2 -

3. Behälter nach einem der Ansprüche 1 oder 2, dadurch g e - k e n n z e i c h n e t, daß als Frisch- und Abwasseran- schlüsse bezüglich ihrer Durchmesserabmessungen unter- schiedliche Schnellkuppler (21',31') verwendet sind, die an der Oberseite (11) des Behälters (1) angebracht sind.

4. Behälter nach Anspruch 1, dadurch g e k e n n z e i ch- n e t, daß der Behälter (1) einen aufklappbaren und wieder zusammenlegbaren Außenbehälter (1') aus einem formbeständigen, steifen und widerstandsfähigen Kunststoff, vorzugsweise aus einer Kunststoff-Wellpappe aufweist.

5. Behälter nach Anspruch 4, dadurch g e k e n n z e i ch- n e t, daß bei einem zylinderförmigen Außenbehälter (1') mit rechteckiger Grundfläche sowohl die Flächen (12) an beiden Schmalseiten als auch die Flächen (13) an beiden Längsseiten oben in etwa trapezförmigen Laschen (14; 15) enden, die ineinanderführbar und aneinander gesichert sind, so daß die Laschen (14;15) einen Traggriff (16) bilden, und daß zur Ausbildung des Behälterbodens (17) die beiden Flächen (13) an den Längsseiten des Außenbehälters (1') nach unten um die Breite der Fläche (12) an den Schmalseiten verlängert sind, wobei der eine Boden (17) an beiden Enden je einen der Breite der Flächen (12) an den Schmalseiten entsprechenden, quadratischen Ansatz (18) aufweist, der im aufgeklappten Zustand des Behälters (1) innen an dessen Schmalseitenflächen (12) anliegt.

6. Behälter nach den Ansprüchen 4 und 5, dadurch g e - k e n n z e i c h n e t, daß zur Halterung und Sicherung der Laschen (14, 15) des Behälters (1) die Laschen (15) an den beiden Schmalseitenflächen (12) etwa in der Mitte je einen Schlitz (14a) aufweisen, in den jeweils am oberen freien Ende der Laschen (15) der beiden Längsseitenflächen (13) ausgebildete, hakenförmige Hinterschneidungen (15a) eingreifen.

7. Behälter nach einem der Ansprüche 4 bis 6, dadurch g e-

- 3 -

kennzeichnet, daß in dem Behälter-Traggriff (16) etwa in der Mitte der beiden oberen Laschen (15) an den Längsseiten je ein Ausschnitt (15b) ausgebildet ist, und daß die Anschlüsse (21; 31) für Frischwasser und Abwasser auf verschiedenen Seiten versetzt zu dem Ausschnitt (15b) in den beiden Laschen (15) an den Längsseiten gehaltert sind.

8. Behälter nach einem der Ansprüche 1 oder 2, dadurch gekennzeichnet, daß die Säcke (2; 3) für Frischwasser und Abwasser unterschiedlich gefärbt sind, und daß in einer der Schmalseiten (12) des Behälters (1) unten auf der Seite, auf welcher der Sack (2) für Frischwaser untergebracht ist, als optische Anzeige ein Schauloch (12a) ausgebildet ist.

FIG. 4

FIG. 1

FIG. 2

FIG. 3

FIG. 5